Europäisches Patentamt

European Patent Office

Office européen des brevets

(19)

(11) Veröffentlichungsnummer: **0 014 869 B1**

# EUROPÄISCHE PATENTSCHRIFT

(12)

(45) Veröffentlichungstag der Patentschrift: 02.03.83

(21) Anmeldenummer: 80100482.1

(22) Anmeldetag: 31.01.80

(51) Int. Cl.³: **B 27 B 5/20**, B 27 G 19/02

(54) **Kreissäge.**

(30) Priorität: 08.02.79 DE 2904685

(43) Veröffentlichungstag der Anmeldung: 03.09.80 Patentblatt 80/18

(45) Bekanntmachung des Hinweises auf die Patenterteilung: 02.03.83 Patentblatt 83/9

(84) Benannte Vertragsstaaten: CH FR NL

(56) Entgegenhaltungen:
CH-A-344 211
DE-C-43 785
GB-A-729 908
US-A-2 294 272
US-A-2 548 279
US-A-2 703 115
US-A-2 949 943
US-A-3 005 477
US-A-3 344 819
US-A-3 463 205
US-A-3 841 188

(73) Patentinhaber: Mafell-Maschinenfabrik Rudolf Mey KG, Postfach 1180, D-7238 Oberndorf a.N. (DE)

(72) Erfinder: Frers, Gerd, Dipl.-Ing., Sommerhaldenweg 21, D-7238 Oberndorf-Aistaig (DE)
Erfinder: Mühlhäusler, Wolfgang, Ing. (grad.), Käsenbachstrasse 28, D-7400 Tübingen (DE)
Erfinder: Krauss, Ernst, Dipl.-Ing., Suppengasse 15, D-7238 Oberndorf-Aistaig (DE)

(74) Vertreter: Schmid, Berthold et al, Patentanwälte Dipl.-Ing. B. Schmid Dr. Ing. G. Birn Falbenhennenstrasse 17, D-7000 Stuttgart 1 (DE)

## Kreissäge

Die Erfindung bezieht sich auf eine Kreissäge, deren angetriebenes Sägeblatt bei Benutzung als Gehrungssäge entlang einer Führung in Richtung der Sägeblattebene verschiebbar und bei Benutzung als Tischkreissäge zumindest in einer Verschiebestellung arretierbar ist, wobei das über die Werkstückauflagefläche nach oben überstehende Teil des Sägeblattes von einer beim Gehrungsbetrieb mitverschiebbaren oberen Schutzhaube übergriffen ist. Eine derartige Kreissäge ist beispielsweise durch die GB-A-729 908 bekanntgeworden. Beim Arbeiten im Tischkreissägenbetrieb steht das Sägeblatt etwa in der Mitte des Sägentisches, und die Werkstücke werden dann gegen das sich lediglich drehende Kreissägeblatt hin verschoben. Um ein ungehindertes Verschieben der Werkstücke zu ermöglichen, ist die obere Schutzhaube verhältnismäßig klein ausgebildet, und sie hat von der Tischebene einen relativ großen Abstand. Dies ermöglicht zwar ein problemloses Verschieben der Werkstücke auf dem Kreissägentisch, hat jedoch den Nachteil, daß der über den Kreissägentisch überstehende Teil des Sägeblattes nur zu einem kleinen Prozentsatz abgedeckt ist. Dies gilt insbesondere dann, wenn das Sägeblatt für eine große Schnittiefe eingestellt ist.

Diese Kreissäge kann auch im sogenannten »Gehrungsbetrieb« verwendet werden, bei welchem das Werkstück auf dem Kreissägentisch festgespannt und das sich drehende Sägeblatt gegen das Werkstück hin verschoben wird. Die Schnittbreite ist dabei abhängig von der Schnittiefe und dem maximal möglichen Verschiebeweg des Sägeblattes. Bei der vorbekannten Kreissäge ist eine verhältnismäßig kurze Schiebeführung vorgesehen, die sich etwa über die halbe Tischlänge erstreckt.

Die Unfallgefahr ist bei diesen beiden Betriebsarten der vorbekannten Kreissäge etwa gleich groß, weil sich der Grad der Abdeckung ausschließlich nach der eingestellten Schnittiefe richtet und im Normalfall nur das obere Ende des über den Kreissägentisch überstehenden Sägeblatteils abgedeckt ist.

Des weiteren ist eine Kreissäge bekanntgeworden, mit der man ebenfalls sowohl im Gehrungsbetrieb als auch im Kreissägenbetrieb arbeiten kann, jedoch ist diese Ausführung insofern noch nachteiliger, als sie überhaupt keine obere Schutzhaube aufweist (US-A-2 548 279).

Die Aufgabe der Erfindung wird infolgedessen darin gesehen, eine Kreissäge der eingangs genannten Art so weiterzubilden, daß sie zumindest beim Betrieb als Gehrungssäge eine höhere Sicherheit gegen Verletzungsgefahr bietet.

Zur Lösung dieser Aufgabe wird erfindungsgemäß vorgeschlagen, daß die Kreissäge gemäß dem Oberbegriff des Anspruchs 1 entsprechend dem Kennzeichen dieses Anspruchs ausgebildet ist. Durch die Verwendung einer Schutzabdeckung, welche das beim Gehrungsbetrieb in seiner Ausgangsstellung befindliche Sägeblatt oberhalb des Sägentisches zumindest seitlich übergreift, verhindert man wirkungsvoll eine Berührung dieses Sägeblatteils beim Ausrichten des zu sägenden Werkstücks auf dem Kreissägentisch oder dergleichen. Dabei hängt es von den gewählten Abmessungen sowohl der Schutzabdeckung als auch der oberen Schutzhaube ab, ob und inwieweit sich die Schutzabdeckung auch noch über die obere Schutzhaube erstreckt, die beim Verändern der Schnittiefe zusammen mit dem Sägeblatt hochgestellt oder abgesenkt werden kann. Die Höhe der Schutzabdeckung ist daher zumindest so zu wählen, daß sie bei maximaler Schnittiefe den von der oberen Schutzhaube nicht übergreifbaren Teil des über der Werkstückauflagefläche befindlichen Sägeblatteils wenigstens seitlich abdeckt. Wenn die Schutzabdeckung den überstehenden Teil des Sägeblattes und die obere Schutzhaube nicht nur seitlich abdeckt, sondern insgesamt umgreift, so ist sie so zu dimensionieren, daß sich die maximale Schnittiefe ohne weiteres einstellen läßt.

Weil beim Gehrungssägen das Werkstück, wie gesagt, auf dem Kreissägentisch oder dergleichen festgespannt wird, es also auf ein ungehindertes Verschieben des Werkstücks gar nicht ankommt, kann man bei dieser Betriebsart der Kreissäge das über die Werkstückauflagefläche überstehende Teil des Sägeblattes vollständig abdecken, so daß man zumindest in der Ausgangslage des Sägeblattes beim Ausrichten des Werkstücks keinerlei Verletzungsgefahr ausgesetzt ist. Andererseits wählt man natürlich die Ausgangs- oder Nullage des Sägeblattes so, daß ein möglichst großer Teil der insgesamt vorhandenen Werkstückauflagefläche für das Aufspannen und Ausrichten des Werkstücks zur Verfügung steht. Maximale Schnittlängen ergeben sich, wenn die beiden Endstellungen beim Gehrungsbetrieb den beiden Enden der Werkstückauflagefläche zugeordnet sind.

Besondere Ausgestaltungen und vorteilhafte Ausbildungen der erfindungsgemäßen Kreissäge ergeben sich aus der nachfolgenden Zeichnungsbeschreibung sowie den Ansprüchen 2 bis 19.

Die Zeichnung zeigt verschiedene Ausführungsbeispiele der Erfindung dar. Es stellt dar:

Fig. 1 eine perspektivische, teilweise aufgebrochene Ansicht einer ersten Ausführungsform,

Fig. 2 eine zweite Ausführungsform in perspektivischer Darstellung,

Fig. 3 eine Seitenansicht der dritten Ausführungsform in einer erweiterten Ausführung,

Fig. 4 eine der Fig. 3 entsprechende Darstellung der dritten Ausführungsform in einer anderen Modifikation,

Fig. 5 – 8 verschiedene Ausführungsformen der unteren Schutzhaube für das Sägeblatt in perspektivischer Darstellung,

Fig. 9 und 10 in perspektivischer Darstellung eine Sicherheitsvorrichtung, wobei Fig. 10 in etwas größerem Maßstab gezeichnet ist,

Fig. 11 – 14 schematisch vier weitere Ausführungsformen einer Sicherheitsvorrichtung in der Seitenansicht bzw. perspektivisch (Fig. 14).

Die Kreissäge besitzt eine Tischplatte 1 mit einer Werkstückauflagefläche 2, die vorzugsweise von zwei parallelen Seitenwänden 3, 4 getragen ist und damit einstückig hergestellt sein kann. Das Sägeblatt 5 befindet sich größtenteils unterhalb der Tischplatte 1 und durchsetzt einen vorzugsweise mittigen Längsschlitz 6 der Tischplatte 1. Die Schnittiefe bestimmt sich nach der Höhe des über die Werkstückauflagefläche 2 überstehenden Teils des Sägeblattes 5. Sie ist, wie nachfolgend noch beschrieben wird, veränderbar. Der nach oben überstehende Sägeblatt-Teil wird von einer oberen Schutzhaube 7 übergriffen, die um eine Achse 8 schwenk- und einstellbar ist. Unterhalb der Tischplatte 2 ist das Sägeblatt durch eine untere Schutzhaube 9 gegen Berühren gesichert.

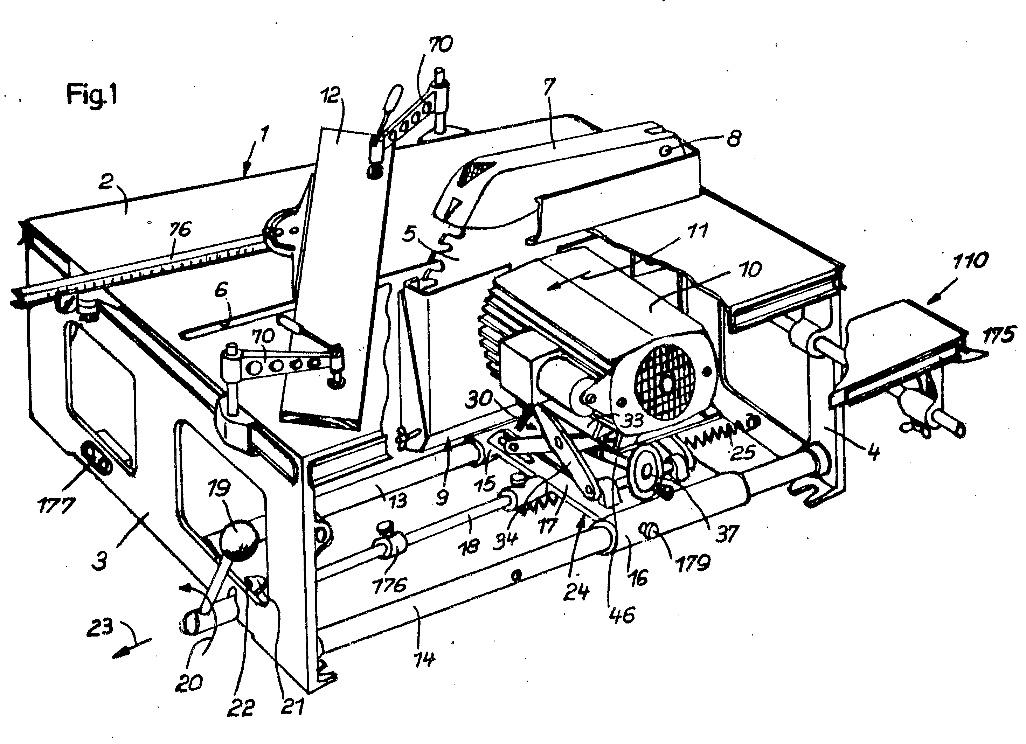

Ausgehend von der beispielsweise in Fig. 1 gezeigten Stellung, kann das Sägeblatt 5 und, sofern es unmittelbar auf die Antriebswelle eines Motors 10 aufgesetzt ist, zusammen mit diesem in Pfeilrichtung 11 verschoben werden. In diesem Fall wird das zu durchsägende Werkstück 12 verschiebefest an der Tischplatte 1 gehalten, und die Kreissäge stellt bei dieser Betriebsart eine Gehrungssäge dar. Wenn man das Sägeblatt in einer vorzugsweise mittigen Stellung gegenüber der Tischplatte in Richtung des Pfeils 11 verschiebefest arretiert, so ist die Säge als herkömmliche Kreissäge zu benutzen.

Das Verschieben des Sägeblattes 5 erfolgt entlang einer Schiebeführung 13, 14. Bei den Ausführungsbeispielen besteht die Schiebeführung aus zwei parallelen Stäben oder Rohren 13, 14. Auf jedem befindet sich beim ersten Ausführungsbeispiel (Fig. 1) eine Gleithülse 15 bzw. 16. Sie sind mittels eines Verbindungselementes 17 bewegungsmäßig gekuppelt. Letzteres kann aus einer Platte, einem kleinen Rahmen od. dgl. bestehen. Es ist in zweckmäßiger Weise mit einem Zugstab 18 verbunden, der durch die Seitenwand 3 nach außen geführt ist und eine Handhabe 19 trägt. Der Zugstab, oder bei zweiteiliger Ausbildung der mit der Handhabe 19 verbundene Teil desselben, ist im Sinne des Pfeils 20 drehbar. Dadurch wird eine Verriegelung gelöst, die aus einem Verriegelungshaken 21, beispielsweise an der Innenseite der Seitenwand 3, und einem radial abstehenden Verriegelungsbolzen 22 des Zugstabes 18 besteht. Das Sägeblatt 5 ist in der sogenannten Null-Lage oder Ausgangslage beim Gehrungssägen verriegelt, die beispielsweise aus Fig. 1 ersichtlich ist. Dreht man die Handhabe 19 zum Lösen der Verriegelung in Pfeilrichtung 20, so kann über die Handhabe 19 eine Zugkraft in Richtung des Pfeils 23 auf den Zugstab 18 aufgegeben werden, wodurch dann der Schlitten 24 von rechts nach links wandert (Fig. 1), so daß das Sägeblatt 5 gegen das Werkstück 12 hin bewegt wird und dieses schließlich durchtrennt. Die Lagerbohrung für den Zugstab 18 in der Seitenwand 3 ist nach oben hin verlängert, um den Durchtritt des Verriegelungsbolzens 22 bei dieser Verschiebung zu ermöglichen. Letztere erfolgt gegen den Widerstand zumindest einer Rückstellfeder 25. Diese ist beispielsweise am Schlitten 24 einerseits und an der Seitenwand 4 andererseits befestigt und als Schraubenzugfeder ausgebildet. Sie führt alle verschobenen Teile in die Ausgangs- oder Null-Lage zurück, wenn die Verschiebekraft an der Handhabe 19 entfällt.

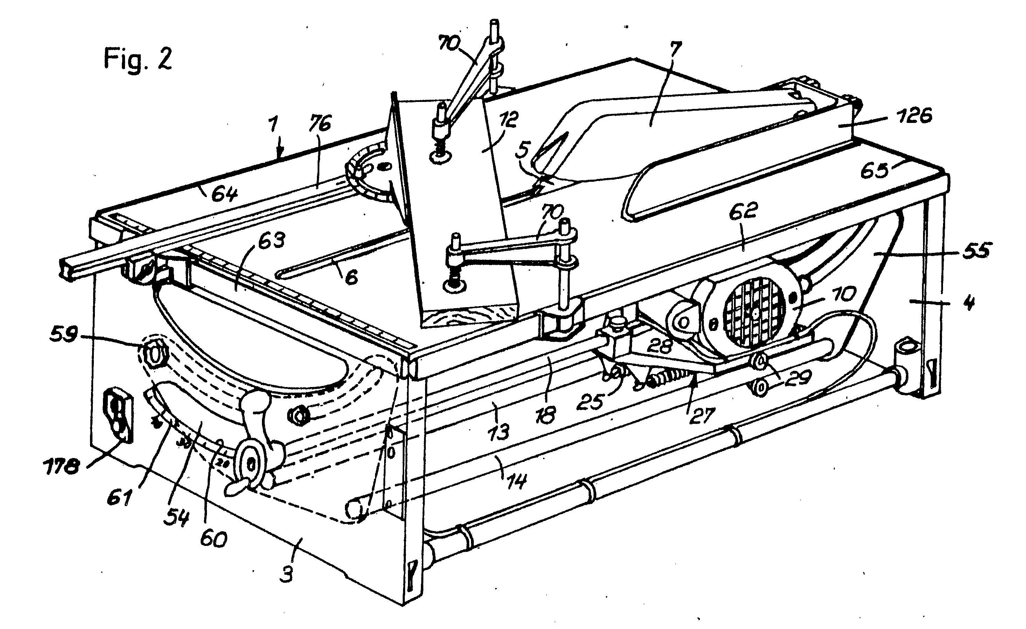

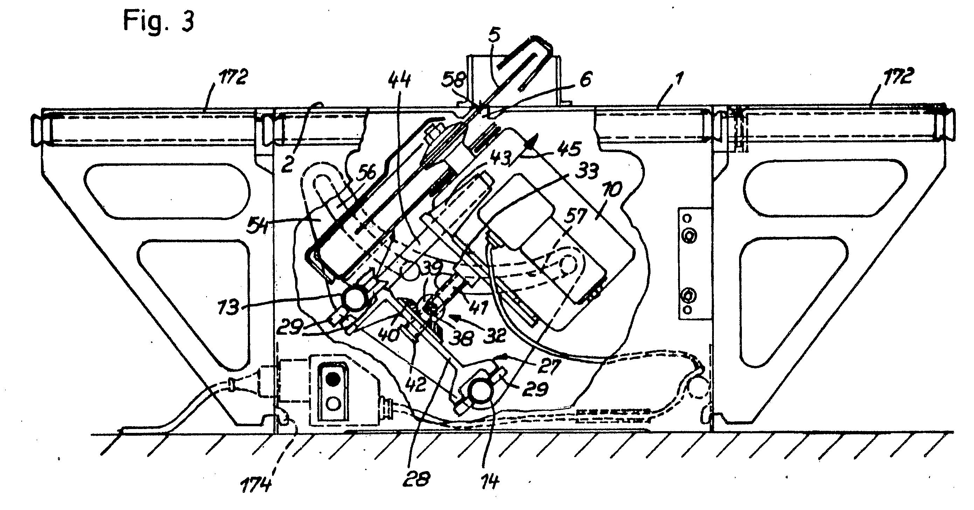

Beim Ausführungsbeispiel der Fig. 2 wird anstelle eines Schlittens ein Wagen 27 verwendet, der im wesentlichen aus einem beispielsweise plattenförmigen Halter 28 und mindestens je einem jedem Rohr 13, 14 zugeordneten Rollenpaar 29 besteht und an dem die einen Enden zweier paralleler Rückstellfedern 25 befestigt sind. Der Querschnitt der Rollenlauffläche ist demjenigen der Schiebeführung, d. h., der Rohre 13, 14, angepaßt, die zweckmäßigerweise einen kreisrunden Querschnitt haben. Der Halter 28 bzw. das Verbindungselement 17 der Gleithülsen 15, 16 bilden zugleich ein Stützglied für den Motor 10. Falls man auf eine Höhenverstellung des Motors bzw. Sägeblattes 5 verzichtet, kann er daran unmittelbar befestigt werden. Im anderen Fall ist noch eine Hubvorrichtung 30 (Fig. 1) oder 32 (Fig. 3) zwischengeschaltet. Bei hebbarem Motor 10 und Sägeblatt 5 kann die Hubvorrichtung 30 beispielsweise aus zwei im seitlichen Abstand am Verbindungselement 17 einerseits und am Motorfuß bzw. einer Tragplatte 33 dafür angeschlagenen Scheren 34 bekannter Konstruktion bestehen.

Beim Ausführungsbeispiel der Fig. 3 wird eine Spindel 38 beispielsweise mittels eines Handrades von Hand angetrieben. Sie trägt an ihrem vom Handrad abgewandten inneren Ende ein Kegelrad 39, dessen Zähne mit denjenigen eines zweiten Kegelrades 40 kämmen. Letzteres ist drehbar an der Platte 28 gelagert und besitzt ein zentrisches Gewinde. Durch dieses Rad führt eine Schraubspindel 41 hindurch, deren unteres Ende einen Anschlag 42 aufweist und deren oberes Ende an der Platte 33 festgemacht ist. An letzterer ist zumindest noch eine Führungshülse 43 vorgesehen, die auf einer Längsführung 44 des Wagens 27 verschieblich ist. Im übrigen zeigt diese Fig. 3, daß es ausreicht, wenn man lediglich eine der vier Rollen der beiden Rollenpaare mit einem an die Längsführung angepaßten Profil versieht und für die übrigen glatte Laufrollen verwendet. Ein Drehen der Spindel 38 in der einen Drehrichtung hat beispielsweise ein Anheben von Motor und Sägeblatt 5 im Sinne des Pfeils 45 zur Folge, während sich ein Drehen in Gegenrichtung in einem Absenken entgegen dem Pfeil 45 auswirkt. In Fig. 3 handelt es sich bei der Spindel 38 um eine einfache, drehbar gelagerte Spindel, während die Spindel 46 der Fig. 1 zumindest teilweise als Schraubspindel ausgebildet ist, wobei letztere in nicht näher gezeigter, aber bekannter Weise mit einem Schraubglied zusammenwirkt. Die Verschraubung von Schraubglied und Schraubspindel bewirkt in der bei herkömmlichen Kreissägen bekannten Weise die Betätigung der Scheren und damit das Heben oder Senken des Sägeblattes 5.

Einen schräg zur Werkstückebene geführten Schnitt kann man auch erreichen, wenn man statt der Tischplatte bzw. Werkstückauflagefläche das Sägeblatt 5 um eine horizontale, etwa in der Sägeblattebene sowie der Werkstückauflagefläche 2 gelegene, gedachte Achse neigt und es in der erreichten Schräglage sowie der vorzugsweise benutzten Vertikallage feststellbar macht. Eine diesbezügliche Ausbildung ergibt sich insbesondere aus Fig. 3. Die Neigung um eine gedachte, etwa am oberen Ende des Längsschlitzes 6 der Tischplatte 1 gelegene Achse ist erforderlich, damit das Sägeblatt 5 diesen Längsschlitz 6 in jeder Schräglage berührungsfrei durchsetzen kann. Gegebenenfalls kann der Schlitz, wie Fig. 3 zeigt, nach unten hin entsprechend verbreitert werden. Die Verschwenkung erreicht man beispielsweise dadurch, daß man die beiden Enden der beiden Schiebeführungsrohre 13, 14 an je einer Schwenkplatte 54 bzw. 55 befestigt. Jede besitzt zwei kreisbogenförmige, in Verlängerung voneinander stehende Führungsschlitze 56 und 57, die konzentrisch zu der gedachten Achse 58 verlaufen. Jede wird von einem Bolzen durchsetzt, der außerdem noch durch eine Bohrung der zugeordneten Seitenwand 3 oder 4 hindurchgesteckt ist. Hierbei kann es sich beispielsweise um eine Schraube handeln, deren Kopf an der Innenseite der Schwenkplatte 54 bzw. 55 anliegt und auf deren nach außen überstehendes Gewinde eine Rändelmutter 59 od. dgl. aufgeschraubt ist. Zusammen mit dem Sägeblatt 5 werden infolgedessen auch der Antriebsmotor 10 und die gesamte Längsführung 13, 14 und gegebenenfalls auch die Hubvorrichtung um die gedachte Achse 58 verschwenkt. Um die jeweilige Schräglage genau einstellen zu können, kann man beispielsweise am Rand des nunmehr kreisbogenförmigen Durchtrittschlitzes 60 für den Zugstab 18 eine Skala 61 anbringen, die mit einer die Schwenkbewegung mitmachenden Ablesemarke zusammenwirkt. Statt dessen kann man die Skala auch an der Schwenkplatte 54 und die Ablesemarke im Bereich des Durchtrittschlitzes 60 an der Seitenwand 3 vorsehen.

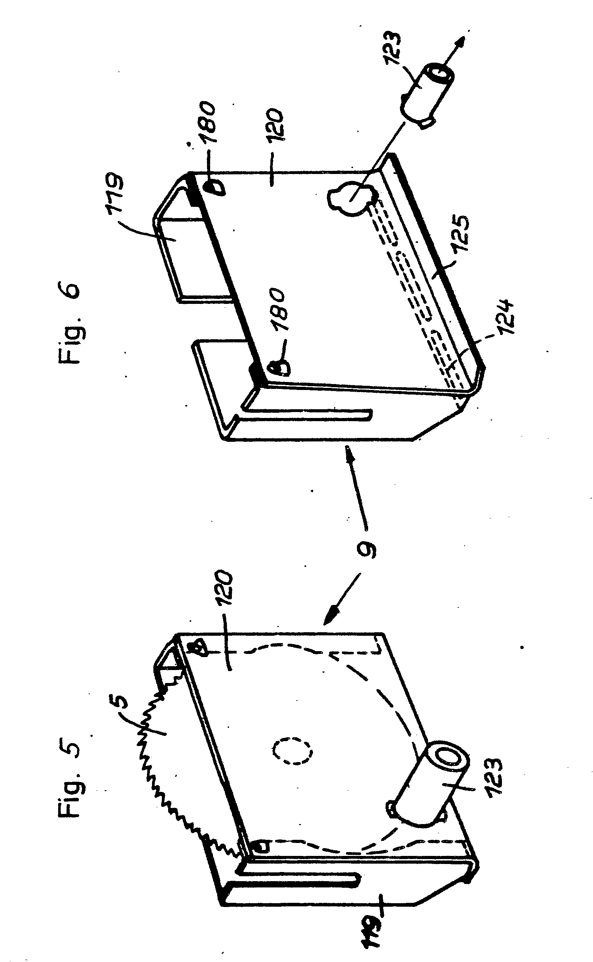

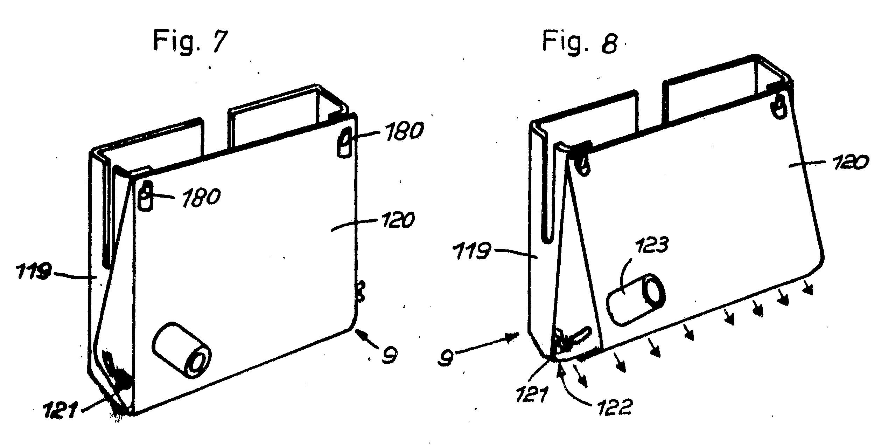

Der überwiegende und sich unterhalb der Tischplatte 1 befindliche Teil des Sägeblattes 5 ist, wie bereits erläutert wurde, gegen Berühren durch eine untere Schutzhaube 9 geschützt. Sie besteht, wie insbesondere die Fig. 5 bis 8 zeigen, vorzugsweise aus zwei Hauptteilen, nämlich dem Gehäuseteil 119 und dem Deckel 120. Letzterer ist bei den Ausführungen gemäß Fig. 7 und 8 klappbar und in verschiedenen Klappstellungen mittels beispielsweise Flügelschrauben oder -muttern 121 klemmend feststellbar. Durch den dabei entstehenden unteren Schlitz 122 kann das Sägemehl austreten. Statt dessen kann man auch einen Anschluß 123 für eine Fremdabsaugung vorsehen. Beim Ausführungsbeispiel der Fig. 6 ist letzterer abnehmbar. Dort besitzt der Gehäuseteil 119 Austrittschlitze 124, die mit Hilfe eines umgebogenen Randes 125 des Deckels 120 freigegeben oder abgedeckt werden können. Zu diesem Zweck kann der Deckel dieser Version in zwei um 180° gewendeten Lagen montiert, insbesondere in Befestigungshaken 180 des Gehäuseteils eingehängt werden. Im übrigen hat ein vollständig abnehmbarer Deckel den Vorteil, daß das Auswechseln des Sägeblattes 5 wesentlich erleichtert wird.

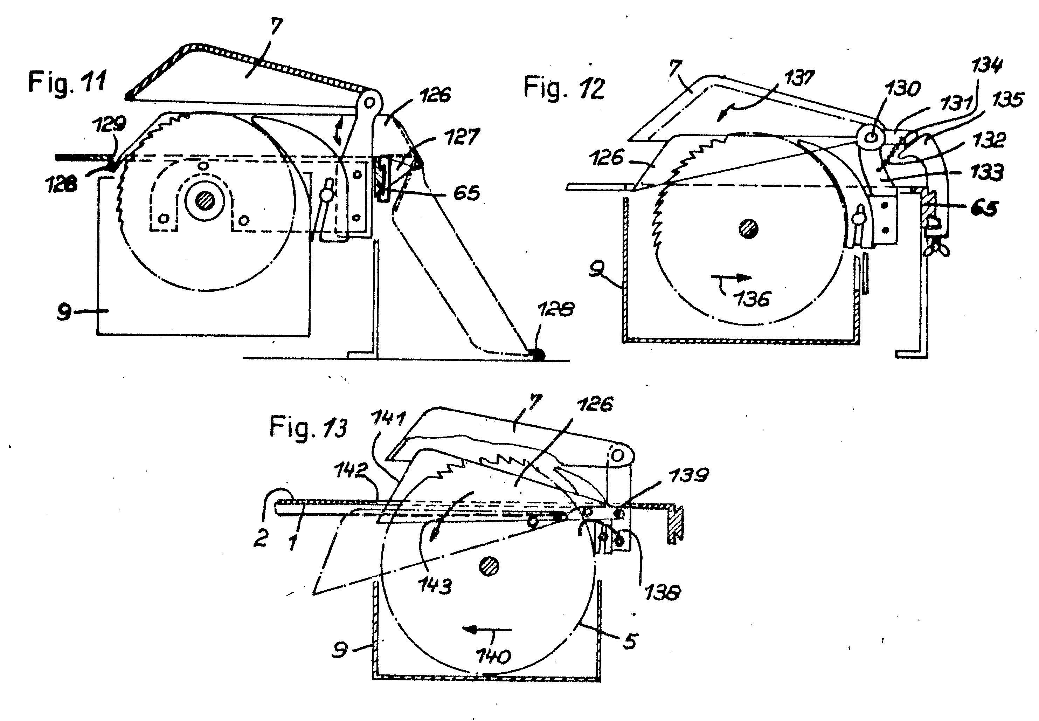

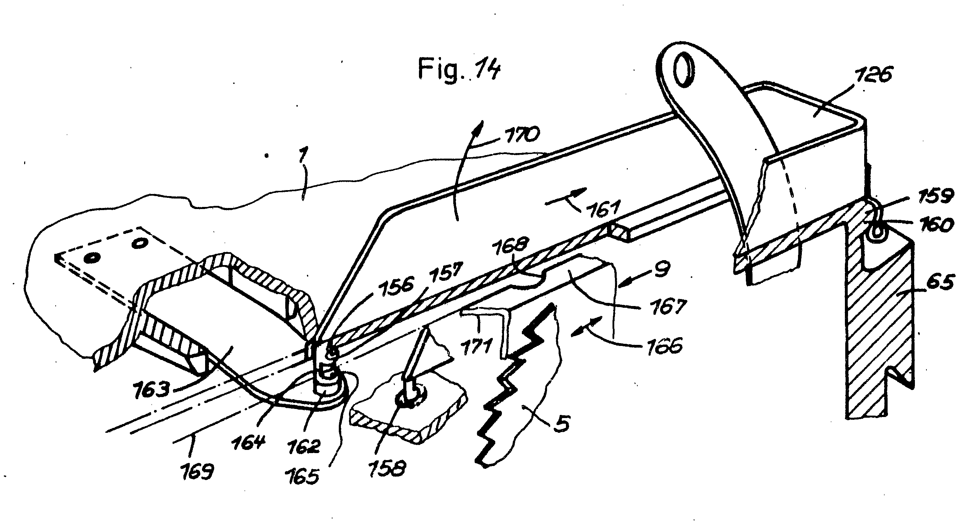

Das Kreissägeblatt 5 nimmt, wie bereits erläutert, gegenüber der Tischplatte zwei bevorzugte Stellungen ein. Beim Arbeiten im Gehrungsbetrieb steht es beispielsweise in den Fig. 1 und 3 am rechten Ende des Längsschlitzes 6. Bei Verwendung als Tischkreissäge, d. h., wenn das Werkstück gegen das Sägeblatt hin verschoben wird, nimmt es bezüglich der Tischplatte 1 eine etwa mittige Stellung ein. Im Gehrungsbetrieb muß die Säge aus Sicherheitsgründen in der Ausgangsstellung arretierbar sein, was, wie erläutert, mittels der Handhabe 19 (Fig. 1) erfolgen kann. Außerdem werden in der sogenannten Null- oder Ausgangslage beim Gehrungsbetrieb der nach oben überstehende Teil des Sägeblattes 5 und die obere Schutzhaube 7 von einer Schutzabdeckung 126 zumindest seitlich umgriffen. Im Kreissägebetrieb legt man indessen Wert auf ein ungehindertes Verschieben des Werkstückes auf der gesamten Tischplatte 1, und deshalb muß die Schutzabdeckung 126 bei der Benutzung als Tischkreissäge abgenommen oder in eine das ungehinderte Verschieben des Werkstücks ermöglichende Lage gebracht werden. In Fig. 11 ist die bei allen Varianten der Ausführungsbeispiele vorzugsweise hufeisen- oder bügelförmige Schutzabdeckung an ihrem von den freien Schenkelenden abgewandten Ende schwenkbar an einem Lagerbock 127 gehalten. Letzterer ist an der oder einer der Befestigungsleisten 65 klemmend montiert. Am freien Ende wenigstens eines Schenkels befindet sich eine Verrastfeder 128, die mit einer zugeordneten Kante 129 der Tischplatte 1 zusammenwirkt. Mit festen Linien ist die Gebrauchslage beim Gehrungssägen und mit strichpunktierten Linien die zurückgeklappte Stellung beim Arbeiten im Kreissägebetrieb dargestellt.

Die Schutzabdeckung 126 der Fig. 11 muß von Hand betätigt werden. Eine automatische Betätigung ist bei den Varianten der Fig. 12 und 13 vorgesehen. In Fig. 12 ist die Schutzabdeckung 126 über das Schwenklager 130 hinaus nach hinten verlängert und somit als doppelarmiger Hebel ausgebildet. Am Verlängerungsstück 131 greift das eine Ende einer Feder 132, vorzugsweise einer Schraubenzugfeder, an, deren anderes Ende am Lagerbock 133 gehalten ist. Das freie Ende des Ansatzes 131 liegt in der gezeichneten Stelle an einer Auflauffläche 134 eines Auflaufgliedes 135 auf. Auch letzteres ist an einer Befestigungsleiste 65 oder -nut klemmend montiert. Die Feder 132 ist an sich bestrebt, die Schutzabdeckung 126 in die mit strichpunktierten Linien gezeichnete wirkungslose Stellung zu ziehen, in der sie sich vorteilhafterweise innerhalb der oberen Schutzhaube 7 befindet. Wenn sie jedoch nach einem Arbeitshub im Gehrungssägebetrieb in Richtung des Pfeils 136 in die Ausgangslage zurückkehrt, so trifft das freie Ende des Verlängerungsstückes 131 auf der Auflagefläche 134 auf, wodurch die Schutzabdeckung 126 von der strichpunktierten Stellung im Sinne des Pfeils 137 in die mit festen Linien gezeichnete Stellung überführt wird, und zwar gegen die Kraft der Feder 132. Letztere wird erst dann wirksam, wenn man das Sägeblatt entgegen dem Pfeil 136 gegen das Werkstück 12 hin verschiebt.

Bei den Ausführungsbeispielen der Fig. 12 und 13 macht die Schutzabdeckung 126 die Längsverschiebebewegung des Sägeblattes 5 mit. Sie befindet sich jedoch bei der Ausführungsform der Fig. 13 in ihrer wirkungslosen Stellung nicht oberhalb, sondern unterhalb der Tischplatte 1, wie in dieser Figur mit strichpunktierten Linien angedeutet ist. Eine Belastungsfeder für die Schutzabdeckung 21 ist in Fig. 13 vorzugsweise als Blattfeder 138 ausgebildet. Diese hat zwar auch das Bestreben, die um die Achse 139 schwenkbare Schutzabdeckung in eine obere Schwenkstellung zu bringen, jedoch handelt es sich dabei um die Arbeitsstellung, im Gegensatz zu Fig. 12. Das in Arbeits-Verschieberichtung 140 vordere, vom Schwenklager 139 entfernte Ende der Schutzabdeckung 126 ist mit einer Auflaufschräge 141 versehen. Diese arbeitet mit einer Abweiskante 142 der Tischplatte 1 zusammen. Verschiebt man das Sägeblatt in Richtung des Pfeils 140 von der Null-Lage aus gegen das Werkstück 12, so trifft die Auflaufschräge 141 an der Abweiskante 142 auf und bewirkt ihr Verschwenken in Richtung des Pfeils 143 gegen den Widerstand der Blattfeder 138. Wenn die mit strichpunktierten Linien gezeichnete Verschwenkendlage erreicht ist, gibt die Schutzabdeckung 126 die gesamte Werkstückauflagefläche 2 frei. Während des Gehrungssäge-Arbeitshubes wird sie unterhalb der Tischplatte 1 verschoben.

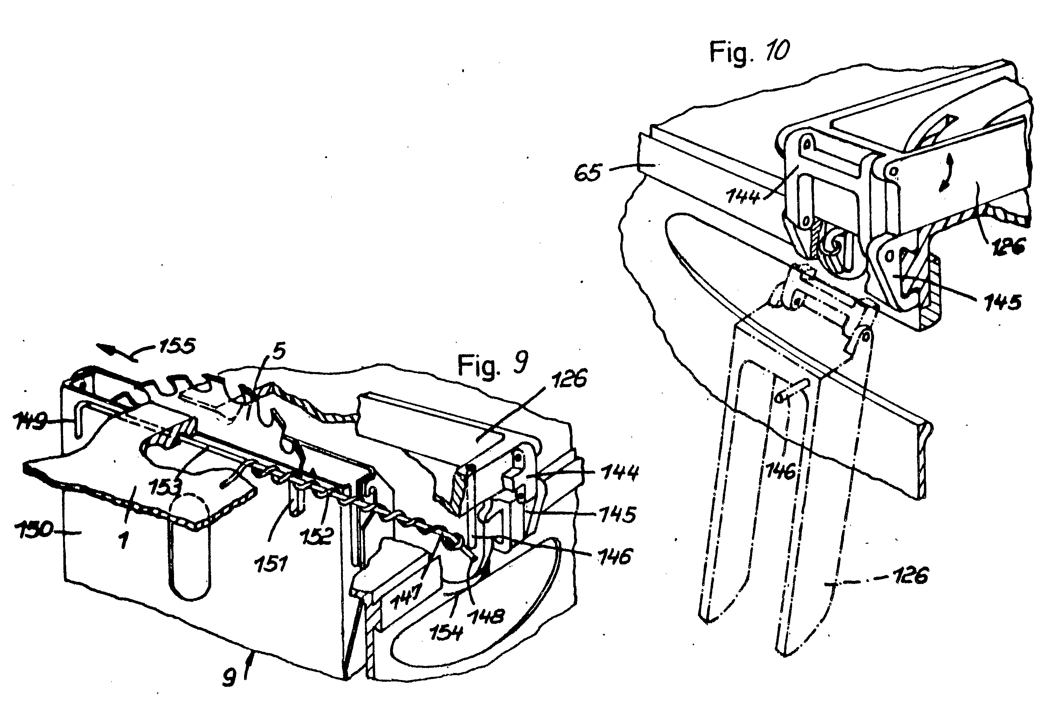

Bei von Hand in eine wirkungslose Stellung klappbarer Schutzabdeckung 126 verhindert eine in den Fig. 9 und 10 oder der Fig. 14 dargestellte Sicherheitseinrichtung, daß man die Säge im Gehrungsbetrieb ohne die Schutzabdeckung 126 benutzen kann. Die Schutzabdeckung 126 der Fig. 10 ist vorzugsweise unter Zwischenschaltung einer Lasche 144 od. dgl. an einem Lagerbock 145 gehalten, der seinerseits an einer Befestigungsleiste 65 oder -nut montiert ist. Er trägt, wie man insbesondere in der mit strichpunktierten Linien gezeichneten schutzunwirksamen zurückgeklappten Stellung ersehen kann, ein stiftförmiges Steuerelement 146. An dessen freiem Ende liegt in der Arbeitsstellung der Schutzabdeckung 126 ein federbelastetes, ortsfest gehaltenes Verrastglied 147 an (Fig. 9). Es besitzt eine bügelförmige Gestalt, jedoch bilden die beiden Bügelschenkel beim Ausführungsbeispiel einen Winkel miteinander. Der eine Bügelschenkel 148 ist dem stiftförmigen Steuerelement 146 zugeordnet, während sich der andere Bügelschenkel 149 seitlich einer Fläche 150 eines zusammen mit dem Sägeblatt 5 verschiebbaren Teils, vorzugsweise einer Wandung der unteren Schutzhaube 9, befindet. Der andere Bügelschenkel 149 arbeitet mit einer Raste 151 dieser Fläche 150 bzw. Wand zusammen. Eine Belastungsfeder 152, die vorzugsweise als Schlingfeder ausgebildet und auf das Mittelstück 153 des Verrastgliedes 147 aufgezogen ist, versucht letzteres im Sinne des Pfeils 154 um seine nicht näher dargestellten Lager an der Unterseite der Tischplatte 1 zu drehen. Diese Drehung wird aber in der Ausgangslage des Sägeblattes 5 und der Arbeitsstellung der Schutzabdeckung 126 durch das stiftförmige Steuerelement 146 verhindert. Infolgedessen kann das Sägeblatt 5 im Gehrungsbetrieb ohne weiteres in Richtung des Pfeils 155 gegen das Werkstück 12 hin verschoben werden, ohne daß sich das Verrastglied 147 drehen und ohne daß der andere Bügelschenkel 149 in die an ihm ebenfalls im Sinne des Pfeils 155 vorbeibewegte Raste 151 eintreten kann. Wenn man jedoch die Schutzabdeckung 126 in die abgeklappte Stellung bringt, die in Fig. 10 mit strichpunktierten Linien gezeichnet ist, so gibt das Steuerelement 146 den daran anliegenden einen Bügelschenkel 148 des Verrastgliedes 147 frei. Nunmehr legt sich auch das freie Ende des anderen Bügelschenkels 149 an der Fläche 150 an. Sobald die Raste 151 nach entsprechender Verschiebung des Sägeblattes 5 in Pfeilrichtung 155 diesen anderen Bügelschenkel 149 erreicht hat, springt er, angetrieben von der Belastungsfeder 152, in die Raste 151 und verhindert dadurch ein weiteres Verschieben des Sägeblattes 5 mit all den mitbewegten Teilen dieser Säge. Zugleich ist auch eine mittlere Position des Sägeblattes 5 gegenüber der Tischplatte 1 und damit die Kreissägestellung erreicht. Ein Übergang zum Gehrungsbetrieb ist nur möglich, wenn man die Schutzabdeckung 126 wieder in ihre Arbeitsstellung bringt und dadurch den anderen Schenkel 149 aus der Raste 151 herausschwenkt.

Eine zweite Variante einer derartigen Sicherungseinrichtung ergibt sich, wie gesagt, aus Fig. 14. Die Schutzabdeckung 126 ist dort allerdings nicht klappbar, sondern abnehmbar an der Tischplatte 1 gehalten. An der Schutzabdeckung 126, insbesondere an deren freien Schenkelenden, ist je ein Verrastelement 156 angebracht. Es besitzt eine hakenförmige Gestalt und umgreift eine Kante 157 einer Verrastausnehmung 158 der Tischplatte 1. Das rastende Einhaken bewirkt eine am Bügelmittelstück befestigte Blattfeder 159, die einen Wulst 160 der Tischplatte 1 übergreift und die Schutzabdeckung 126 in Richtung des Pfeils 161 federbelastet. Der Wulst 160 befindet sich an einer der Querkanten der Tischplatte 1 oberhalb einer Befestigungsleiste 65 oder -nut.

Wenigstens eines der Verrastelemente 156 hält in seiner Verraststellung ein federbelastetes Riegelglied 162 in seiner wirkungslosen Freigabestellung. Es hat eine zapfenförmige Gestalt und befindet sich am freien Ende einer Blattfeder 163, deren vom Riegelglied 162 abgewandtes Ende mittels beispielsweise zweier Niete an der Tischplatte 1 gehalten und durch zwei angeformte Leisten der letzteren in Verschwenkrichtung geführt ist.

Das Riegelglied 162 stützt sich nicht unmittelbar am Verrastelement 156, sondern an einem Verlängerungsstück 164 des letzteren ab. Dieses hat eine winkelförmige Gestalt und bildet mit dem Verrastelement 156 zusammen einen Durchtrittsschlitz 165 für ein entsprechend dimensioniertes, mit dem Sägeblatt 5 zusammen in Richtung des Doppelpfeils 166 verschiebbares Teil 167. An letzterem befindet sich eine Verriegelungsausnehmung 168 in Form einer etwa halbkreisförmigen Kerbe. Die Bewegungsbahn des Teils 167 ist durch die strichpunktierte Linie 169 symbolisiert. Daran erkennt man, daß das Teil 167 ohne Behinderung durch den Schlitz 165 verschoben werden kann. Das gilt für den Gehrungsbetrieb.

Nimmt man nunmehr die Schutzabdeckung 126 ab, indem man sie gegen den Widerstand der Feder 159 und entgegen dem Pfeil 161 verschiebt und anschließend in Pfeilrichtung 170 um den Wulst 160 kippt, so legt sich das Riegelglied 162 an der Unterseite 171 des Teils 167 an. Sobald die Verriegelungsausnehmung 168 beim Verschieben der Kreissäge 5 entgegen dem Pfeil 161 auf Höhe des Riegelgliedes 162 angekommen ist, springt dieses in die Verriegelungsausnehmung 168 ein und verhindert dadurch ein weiteres Verschieben des Sägeblattes 5 mit allen mitbewegten Teilen. Eine Entriegelung kann nur vorgenommen werden, wenn man das Riegelglied 162 durch Anmontieren der Schutzabdeckung 126 wieder in die in Fig. 14 gezeigte wirkungslose Stellung zurückschwenkt.

Die erfindungsgemäße Säge ist sehr handlich und leicht transportierbar, so daß man sie überall, insbesondere auf alle Baustellen, ohne weiteres mitnehmen kann. Falls erforderlich, kann man vier abnehmbare Füße 172 in geeignete Halterungen des Untergestells, Rahmens od. dgl. einstecken und in bekannter Weise darin festhalten.

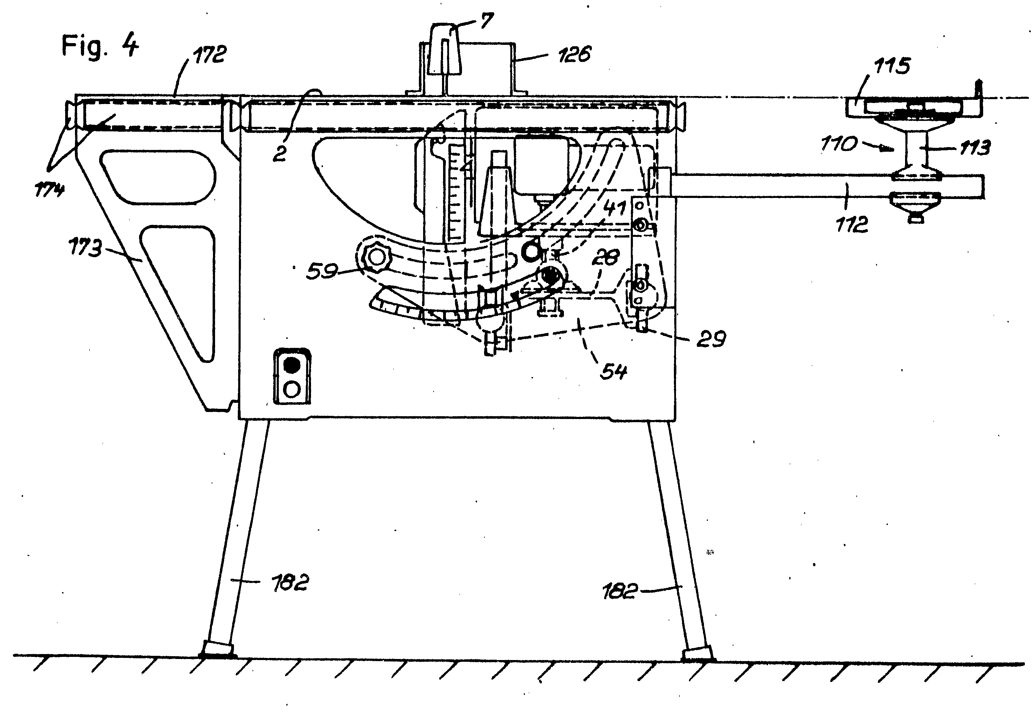

Die Auflagefläche läßt sich, wie bereits erläutert, bei Verwendung wenigstens einer Schwenkauflage 110 vergrößern. Im Bedarfsfall kann man eine Vergrößerung der Werkstückauflagefläche 2 auch mit Hilfe von Zusatztischplatten 172 erreichen, die man insbesondere an die Schmalseiten der Tischplatte 1 ansetzt. Sie können mit Stützkonsolen 173 versehen sein. Befestigungshaken 174 (Fig. 4) durchsetzen entsprechende Befestigungsschlitze des Gestells, Rahmens od. dgl., insbesondere der Seitenwände 3 und 4. An den freien Längskanten der Zusatz-Tischplatte 172 können Befestigungsleisten 174 oder Befestigungsnuten vorgesehen sein, die mit denjenigen der Tischplatte 1 vorzugsweise fluchten und insbesondere gleich ausgebildet sind wie diese.

In Fig. 1 der Zeichnung ist noch eine andere Ausführungsform einer Schwenkauflage 110 gezeichnet, deren Ausbildung und Verstellmöglichkeit aus der Zeichnung so deutlich hervorgeht, daß in Verbindung mit der vorstehenden Beschreibung nähere Ausführungen entbehrlich sein dürften. Dort sind Befestigungsleisten 175 vorgesehen. Außerdem erkennt man in Fig. 1 noch einen verstellbaren Anschlag 176, der die Verschiebebewegung in Pfeilrichtung 23 beim Gehrungsbetrieb beendet, wenn er an der Innenseite der Seitenwand 3 auftrifft. 177 bezeichnet eine Steckdose zum Anschluß des Elektromotors 10 mit Hilfe eines abnehmbaren Kabels, und 178 (Fig. 3) einen Schalter bei fest montiertem Anschlußkabel.

Eine Arretierung des Sägeblattes 5 erreicht man in der Kreissägenstellung mit Hilfe eines insbesondere federbelasteten Verrastbolzens 179 an der Gleithülse 16, der bei fluchtender Anordnung in eine Querbohrung 180 des Rohres 14 der Schiebeführung eintritt. Der Verrastbolzen 179 kann durch eine Drehung um beispielsweise 90° oder 180° in einer wirkungslosen Stellung gehalten werden.

## Patentansprüche

1. Kreissäge, deren angetriebenes Sägeblatt (5) bei Benutzung als Gehrungssäge entlang einer Führung (13, 14) in Richtung der Sägeblattebene verschiebbar und bei Benutzung als Tischkreissäge zumindest in einer Verschiebestellung arretierbar ist, wobei das über die Werkstückauflagefläche (2) nach oben überstehende Teil des Sägeblattes (5) von einer beim Gehrungsbetrieb mitverschiebbaren oberen Schutzhaube (7) übergriffen ist, dadurch gekennzeichnet, daß in der Ausgangsstellung beim Gehrungsbetrieb, in der sich das Sägeblatt am Anfang der Führung befindet, der überstehende Teil des Sägeblattes (5) und gegebenenfalls auch wenigstens ein Teil der oberen Schutzhaube (7) von einer Schutzabdeckung (126) zumindest seitlich umgriffen ist bzw. sind.

2. Kreissäge nach Anspruch 1, mit einem hin- und herbewegbaren Schlitten (24) oder Wagen (27) zur verschiebbaren Lagerung des Sägeblattes (5) und seiner Antriebsvorrichtung, vorzugsweise eines Elektromotors (10), entlang einer Schiebeführung (13, 14), dadurch gekennzeichnet, daß die Schutzabdeckung (126) als Steue-

rungsorgan für eine Arretierungsvorrichtung (149, 151, 162, 168) des Schlittens (24) oder Wagens ausgebildet ist, die den Schlitten oder Wagen bei Tischkreissägenbetrieb, das heißt, einer gegenüber der Werkstückauflagefläche (2) vorzugsweise etwa mittigen Stellung, festhält, wobei sich bei abgenommener oder in eine wirkungslose Stellung gebrachter Schutzabdeckung (126) die Arretierungsvorrichtung in Arretierungsstellung oder in einer Arretierungsbereitschaftsstellung befindet.

3. Kreissäge nach Anspruch 1 oder 2, dadurch gekennzeichnet, daß die Schutzabdeckung (126) schwenkbar an der Tischplatte (1) oder dem Gestell der Kreissäge gelagert ist und ein Lagerbock (127, 145) an einer Befestigungsleiste (65) oder -nut der Tischplatte (1) gehalten ist.

4. Kreissäge nach Anspruch 3, dadurch gekennzeichnet, daß die Schutzabdeckung (126), insbesondere an ihrem freien Ende, ein Verrastelement (128) trägt, das mit einer Rastkante (129) oder -ausnehmung der Tischplatte (1) in der Gebrauchslage zusammenwirkt.

5. Kreissäge nach wenigstens einem der Ansprüche 1 bis 3, dadurch gekennzeichnet, daß die Schutzabdeckung (126) mittels wenigstens einer Feder, vorzugsweise Blattfeder (138), in einer hochgeschwenkten Arbeitsstellung gehalten ist, ihr in Arbeits-Verschieberichtung (140) vorderes, vom Schwenklager (139) entferntes Ende, eine Auflaufschräge (141) besitzt und sich im Bewegungsbereich der Auflaufschräge (141) eine Abweiskante (142) befindet, und daß die Schutzabdeckung (126) mit dem Sägeblatt (5) zusammen verschiebbar ist.

6. Kreissäge nach Anspruch 1 oder 2, dadurch gekennzeichnet, daß die Schutzabdeckung (126) mittels wenigstens einer Feder (132), vorzugsweise Schraubenzugfeder, in eine hochgeschwenkte, wirkungslose Stellung belastet ist und sie sich in Arbeitsstellung mit einem rückwärtigen Ansatz (131), an welchem das eine Federende angreift, an einer Auflauffläche (134) eines ortsfesten Auflaufgliedes (135) abstützt und daß die Schutzabdeckung (126) mit dem Sägeblatt (5) zusammen verschiebbar ist.

7. Kreissäge nach Anspruch 2, dadurch gekennzeichnet, daß die Schutzabdeckung (126) ein, vorzugsweise stiftförmiges, Steuerelement (146) trägt, an dem sich in der Arbeitsstellung ein gegen das Steuerelement hin federbelastetes, ortsfest gehaltenes Verrastglied (147) abstützt, und daß das Verrastglied bei wirkungsloser, insbesondere zurückgeklappter, Schutzabdeckung (126), bei Tischkreissägebetrieb, in eine Raste (151) eines mit dem Sägeblatt zusammen verschiebbaren Elements (150) einrastet.

8. Kreissäge nach Anspruch 7, dadurch gekennzeichnet, daß sich die Raste (151) an einer unteren Schutzhaube (9) des Sägeblattes (5) befindet.

9. Kreissäge nach Anspruch 7 oder 8, dadurch gekennzeichnet, daß das Verrastglied (147) eine bügelförmige Gestalt besitzt, wobei sein einer Bügelschenkel (148) dem Steuerelement (146) zugeordnet und sein anderer Bügelschenkel (149) mit der Raste (151) verrastbar ist.

10. Kreissäge nach Anspruch 9, dadurch gekennzeichnet, daß die Belastungsfeder (152) auf das Bügelmittelstück (153) aufgeschoben und als schraubenförmige Feder ausgebildet ist, deren eines, abstehendes Ende eine ortsfeste Stützfläche (1) untergreift und deren anderes Ende am einen Bügelschenkel (148) gehalten ist.

11. Kreissäge nach Anspruch 2, dadurch gekennzeichnet, daß die Schutzabdeckung (126) mittels wenigstens eines Verrastelements (156) sowie mindestens einer Verrastfeder (159) in Arbeitsstellung gehalten ist, daß das oder zumindest ein Verrastglied in seiner Verraststellung ein federbelastetes Riegelglied (162) in einer wirkungslosen Stellung hält, welches in seiner Freigabestellung und der Tischkreissägenstellung des Sägeblattes (5) in eine Verriegelungsausnehmung (168) eines mit dem Sägeblatt verschiebbaren Teils (167) eingreift.

12. Kreissäge nach Anspruch 11, dadurch gekennzeichnet, daß sich an jedem der beiden Schenkel, insbesondere im Bereich der Schenkelenden der bügelförmigen Schutzabdeckung (126), ein gegen das Bügelmittelstück hin wirksames, hakenartiges Verrastelement (156) befindet, das eine Kante (157) der Tischplatte (1) übergreift, und daß sich die als Blattfeder (159) ausgebildete Verrastfeder am Bügelrücken befindet und sie einen, insbesondere wulstförmigen, Ansatz (160) der Tischplatte (1) oder einer Tischkante (66) übergreift.

13. Kreissäge nach Anspruch 11 oder 12, dadurch gekennzeichnet, daß das Riegelglied (162) an einer Blattfeder (163) angeordnet ist und sich an einem Verlängerungsstück (164) des bzw. eines Verrastelements (156) abstützt.

14. Kreissäge nach Anspruch 13, dadurch gekennzeichnet, daß das Verlängerungsstück (164) des Verrastelements (156) einen Durchtrittsschlitz (165) für das die Verriegelungsausnehmung (168) aufweisende Teil (167) besitzt oder teilweise bildet.

15. Kreissäge nach Anspruch 14, dadurch gekennzeichnet, daß sich die Verriegelungsausnehmung (168) an einem Außenrand (167) der unteren Schutzhaube (9) befindet.

16. Kreissäge nach wenigstens einem der Ansprüche 8 bis 15, dadurch gekennzeichnet, daß die untere Schutzhaube (9) zweiteilig ausgebildet ist oder einen Deckel (120) oder eine Klappe besitzt.

17. Kreissäge nach einem oder mehreren der Ansprüche 8 bis 16, dadurch gekennzeichnet, daß die untere Schutzhaube (9) einen Anschluß (123) für eine Luftabsaugung besitzt.

18. Kreissäge nach wenigstens einem der vorhergehenden Ansprüche, dadurch gekennzeichnet, daß sich das Sägeblatt (5) im wesentlichen unterhalb einer Werkstückauflagefläche (2) befindet und letztere um eine horizontale, etwa in der Sägeblattebene gelegene geometrische Achse von der Horizontalstellung nach zumindest einer Seite hin neigbar sowie in jeder Neig- bzw. Drehlage feststellbar ist.

## Claims

1. Circular saw, the driven saw blade (5) of which, when used as a mitring saw, is displaceable along a guideway (13, 14) in the direction of the pane of the saw blade and, when used as a table circular saw, is lockable in at least one displacement position, whereby the upwardly-projecting part of the saw blade (5) above the workpiece-supporting surface (2) is overlapped by an upper protective hood (7) which is displaceable with it during mitring, characterised in that, in the starting position during mitring, in which the saw blade is positioned at the beginning of the guideway, the projecting part of the saw blade (5) and optionally also at least one part of the upper protective hood (7) is or are laterally surrounded by a protective cover (126).

2. Circular saw according to claim 1, having a slide (24) or carriage (27) displaceable back and forth for the adjustable mounting of the saw blade (5) and its drive means, preferably an electric motor (10), along a guideway (13, 14), characterised in that the protective cover (126) is formed as a control means for a locking mechanism (149, 151, 162, 168) of the slide (24) or carriage, which arrests the slide or carriage during use as a table circular saw, i.e. preferably in a roughly central position with regard to the workpiece-supporting surface (2), whereby the locking mechanism is in a locking position or in a ready-to-lock position when the protective cover (126) is removed or brought into an ineffective position.

3. Circular saw according to claim 1 or 2, characterised in that the protective cover (126) is mounted pivotally on the table top (1) or the frame of the circular saw and a mounting means (127, 145) is held on a fastening edge (65) or groove of the table top.

4. Circular saw according to claim 3, characterised in that the protective cover (126) carries a locking element (128), which cooperates in use with a locking edge (129) or detent on the table top (1).

5. Circular saw according to at least one of claims 1 to 3, characterised in that the protective cover (126) is held in a highly-pivotal working position by means of a spring, preferably a leaf spring (138), its end which is to the front in the direction of displacement during working (40) and is remote from the pivot mounting (139) has a rising slope (141) and a deflector edge (142) is located in the displacement region of the rising slope (141), and in that the protective cover (126) is displaceable together with the saw blade (5).

6. Circular saw according to claim 1 or 2, characterised in that the protective cover (126) is biased into a highly pivoted inoperative position by means of at least one spring (132), preferably a tension coil spring, and is held in the working position by a rearward extension (131), which one end of the spring engages, to an upwardly-sloping surface (134) of a fixed ramp member (135) and in that the protective cover (126) is displaceable together with the saw blade.

7. Circular saw according to claim 2, characterised in that the protective cover (126) carries a control element (146) which is preferably in the form of a rod, on which in the working position a spring-loaded fixed locking member (147) is held against the control element, and in that, during use as a table circular saw when the protective cover is inoperative, especially when folded back, the locking member engages in a stop (151) in an element (150) which is displaceable together with the saw blade.

8. Circular saw according to claim 7, characterised in that the stop (151) is located on a lower protective hood (9) for the saw blade.

9. Circular saw according to claim 7 or 8, characterised in that the locking member (147) has a bowed form, of which one leg (148) is adjacent to the control element (146) and the other leg (149) is engageable with the stop (151).

10. Circular saw according to claim 9, characterised in that the biasing spring (152) is pushed onto the central part of the bow (153) and is formed as a coil spring, of which one projecting end engages under a fixed support surface (1), and the other end is fixed to one leg of the bow (148).

11. Circular saw according to claim 2, characterised in that the protective cover (126) is held in the operative position by means of at least one locking element (156) as well as at least one locking spring (159), in that the or at least one locking member holds, in its locking position, a spring-urged bolting member (162) in an inoperative position, which in its released position, and in the »table circular saw position« of the saw blade, engages in a locking detent (168) of a part (167) which is displaceable together with the saw blade.

12. Circular saw according to claim 11, characterised in that on each of the two legs, especially in the region of the ends of the legs of the stirrup-shaped protective cover (126), a hook-shaped locking element (156) is located which is operable against the central portion of the stirrup, which overlaps an edge (157) of the table top (1), and in that the locking spring which is formed as a leaf spring (159) is located at the rear of the stirrup and overlaps a preferably convex extension (160) of the table top (1) or a table edge (66).

13. Circular saw according to claim 11 or 12, characterised in that the bolting member (162) is arranged on a leaf spring (163) and is supported on an extension piece (164) of the or a locking element (156).

14. Circular saw according to claim 13, characterised in that the extension piece (164) of the locking element (156) has a through slot (165) for the part (167) which has or partially forms the locking detent (168).

15. Circular saw according to claim 4, characterised in that the locking detent (168) is located on an outer edge (167) of the lower protective hood (9).

16. Circular saw according to at least one of the claims 8 to 15, characterised in that the lower protective hood (9) is formed in two parts or has a cover (120) or flap.

17. Circular saw according to one or more of claims 8 to 16, characterised in that the lower protective hood (9) has a connection (123) for air suction means.

18. Circular saw according to at least one of the preceding claims, characterised in that the saw blade (5) is located substantially beneath a workpiece-supporting surface (2) and the latter is tiltable about a horizontal axis which is roughly in the plane of the saw blade from the horizontal position towards at least one side as well as being fixable in each tilted or turned position.

## Revendications

1. Scie circulaire dont la lame de scie entraînée (5) peut être déplacée en translation dans une direction parallèle à son plan, le long d'un guide (13, 14) lors de l'utilisation comme scie à onglets et, peut être bloquée au moins dans une position de translation pour l'utilisation en scie circulaire à table, la partie de la lame de scie (5) qui fait saillie vers le haut au-dessus de la surface (2) d'appui des pièces étant coiffée par un capot de protection supérieur (7) qui peut être déplacé en translation avec elle lors de la coupe d'onglets, caractérisée en ce que, dans la position de départ, du fonctionnement en scie à onglets, dans laquelle la lame de scie se trouve au début du guide, la partie dépassante de la lame de scie (5) et éventuellement également au moins une partie du capot de protection supérieure est ou sont entourées du moins latéralement, par un couvercle de protection (126).

2. Scie circulaire suivant la revendication 1, comportant un coulisseau (24) ou chariot (27) à mouvement de va-et-vient pour le support mobile en translation de la lame de scie (5) et de son dispositif d'entraînement, de préférence un moteur électrique (10), le long d'un guide de translation (13, 14), caractérisée en ce que le couvercle de protection (126) est constitué sous la forme d'un organe de commande pour un dispositif de verrouillage (149, 151, 162, 168) du coulisseau (24) ou chariot, qui immobilise le coulisseau ou chariot dans le cas du fonctionnement en scie circulaire à table, c'est-à-dire dans une position de préférence à peu près centrale par rapport à la surface (2) d'appui des pièces, tandis que, lorsque le couvercle de protection (126) est enlevé ou placé dans une position inactive, le dispositif de blocage se trouve dans la position de blocage ou dans une position de préparation au blocage.

3. Scie circulaire suivant la revendication 1 ou 2, caractérisée en ce que le couvercle de protection (126) est monté pivotant sur le plateau (1) de la table ou le châssis de la scie circulaire et un bloc palier (127, 145) est maintenu sur une barre de fixation (65) ou une rainure de fixation du plateau (1) de la table.

4. Scie circulaire suivant la revendication 3, caractérisée en ce que le couvercle de protection (126) porte en particulier à son extrémité libre, un élément de verrouillage (128) qui coopère avec un bord d'arrêt (129) ou évidement d'arrêt du plateau (1) de la table dans la position d'utilisation.

5. Scie circulaire suivant au moins l'une des revendications 1 à 3, caractérisée en ce que le couvercle de protection (126) est maintenu dans une position de travail relevée au moyen d'au moins un ressort, de préférence un ressort à lame (138), son extrémité avant dans le sens (140) de la translation de travail, qui est éloignée du palier de pivotement (139) possède un chanfrein de rencontre (141) et dans la région du déplacement du chanfrein de rencontre (141), se trouve un bord d'écartement (142), et en ce que le couvercle de protection (126) est mobile en translation avec la lame de scie (5).

6. Scie circulaire suivant la revendication 1 ou 2, caractérisée en ce que le couvercle de protection (126) est sollicité vers une position inactive, basculée vers le haut, au moyen d'un ressort (132), de préférence un ressort de traction hélicoïdal, et, dans la position de travail, il prend appui par un prolongement arrière (131) qui est attaqué par une extrémité d'un ressort sur une surface d'appui (134) d'un organe d'appui (135) fixe en position et en ce que le couvercle de protection (126) est mobile en translation avec la lame de scie (5).

7. Scie circulaire suivant la revendication 2, caractérisée en ce que le couvercle de protection (126) porte un élément de commande (146) de préférence en forme de tige, contre lequel prend appui, dans la position de travail, un organe de verrouillage (147) maintenu fixe, sollicité élastiquement vers l'élément de commande, et en ce que, lorsque le couvercle de protection (126) est inactif, notamment rabattu, pour le fonctionnement en scie circulaire à table, l'organe de verrouillage s'encliquette dans une encoche (151) d'un élément (150) mobile en translation conjointement avec la lame de scie.

8. Scie circulaire suivant la revendication 7, caractérisée en ce que l'encoche (151) se trouve sur un capot de protection inférieur (9) de la lame de scie (5).

9. Scie circulaire suivant la revendication 7 ou 8, caractérisée en ce que l'organe de verrouillage (147) a une configuration en forme d'étrier, l'une des branches d'étrier (148) étant associée à l'élément de commande (146) et l'autre branche d'étrier (149) pouvant être bloquée dans l'encoche (151).

10. Scie circulaire suivant la revendication 9, caractérisée en ce que le ressort de sollicitation (152) est enfilé sur l'élément central (163) de l'étrier et est réalisé sous la forme d'un ressort hélicoïdal dont une extrémité saillante est engagée sous une surface d'appui fixe en position (1) et dont l'autre extrémité est fixée à l'une des branches (148) de l'étrier.

11. Scie circulaire suivant la revendication 2, caractérisée en ce que le couvercle de protection (126) est maintenu dans la position de travail au moyen d'au moins un élément de verrouillage (156) ainsi que d'au moins un ressort d'arrêt (159) en ce que dans sa position de verrouillage, l'organe de verrouillage ou au moins un organe de verrouillage maintient dans une position inactive un organe d'immobilisation (162) sollicité élastiquement, qui, dans sa position de libération et dans la position en scie circulaire à table de la lame de scie est engagé dans un évidement de verrouillage (168) d'une partie (167) qui se déplace en translation avec la lame de scie.

12. Scie circulaire suivant la revendication 11, caractérisée en ce que sur chacune des deux branches, en particulier dans la région des extrémités des branches du couvercle de protection (126) en forme d'étrier, se trouve un élément d'arrêt en forme de crochet (156) agissant contre le déplacement de l'élément central de l'étrier, qui emboîte un bord (157) du plateau (1) de la table et en ce que le ressort d'arrêt, réalisé sous la forme d'un ressort à lame se trouve sur le dos de l'étrier et emboîte un prolongement (160) notamment en forme de bourrelet, du plateau (1) de la table ou d'un bord (66) de la table.

13. Scie circulaire suivant la revendication 11 ou 12, caractérisée en ce que l'organe de verrouillage (162) est monté sur un ressort à lame (163) et prend appui sur un prolongement (164) de l'élément de verrouillage (156) ou d'un élément de verrouillage.

14. Scie circulaire suivant la revendication 13, caractérisée en ce que le prolongement (164) de l'élément de verrouillage (156) présente ou forme partiellement une fente de passage (165) pour la pièce (167) qui présente l'évidement de verrouillage (168).

15. Scie circulaire suivant la revendication 14, caractérisée en ce que l'évidement de verrouillage (168) se trouve sur un bord extérieur (167) du capot de protection inférieur (9).

16. Scie circulaire suivant au moins l'une des revendications 8 à 15, caractérisée en ce que le capot de protection inférieur (9) est réalisé en deux pièces ou possède un couvercle (120) ou un abattant.

17. Scie circulaire suivant l'une quelconque des revendications 8 à 16, caractérisée en ce que le capot de protection inférieur (9) possède un raccord (123) pour une aspiration d'air.

18. Scie circulaire suivant l'une quelconque des revendications précédentes, caractérisée en ce que la lame de scie (5) se trouve essentiellement au-dessous d'une surface (2) d'appui des pièces et que cette dernière peut être inclinée, à partir d'une position horizontale vers au moins un côté, autour d'un axe géométrique horizontal situé à peu près dans le plan de la lame de scie, et peut être immobilisé dans chaque position d'inclinaison ou de rotation.

Fig.1

Fig. 2

Fig. 3

Fig. 4

0 014 869

Fig. 5

Fig. 6

Fig. 8

123
122
121
119
120
9

Fig. 7

180
180
120
9
8
119
121

Fig. 10

Fig. 9

0 014 869

Fig. 11

Fig. 12

Fig. 13

0 014 869

Fig. 14